# EUROPEAN PATENT APPLICATION

(11) **EP 4 697 486 A1**
(43) Date of publication of application: **18.02.2026**
(21) Application number: 24935290.7
(22) Date of filing: 30.08.2024
(51) Int. Cl.: H01M 50/534

(54) **BUSBAR, BATTERY CELL AND BATTERY**

(30) Priority: 03.07.2024 CN 202421568432 U
(71) Applicant: Eve Energy Co., Ltd., Huizhou, Guangdong 516006 (CN)
(72) Inventor: LI, Jidong, Huizhou, Guangdong 516006 (CN); FU, Zhibo, Huizhou, Guangdong 516006 (CN); WANG, Xingjian, Huizhou, Guangdong 516006 (CN); SONG, Pengyuan, Huizhou, Guangdong 516006 (CN)
(74) Representative: Zhu, Puxing
(86) International application number: PCT/CN2024/115942
(87) International publication number: WO 2026/007222

(57) **Abstract**

The present application provides a current collector, a battery cell, and a battery. The current collector includes a current collector body and a surface aluminum layer. The current collector body is a copper layer, and the surface aluminum layer covers an outer surface of the current collector body.

## Description

This application claims priority to Chinese Patent Application No. 202311750512.5 filed with the China Patent Office on December 18, 2023, and Chinese Patent Application No. 202421568432.8 filed with the China Patent Office on July 3, 2024, the entire contents of both applications being incorporated herein by reference.

### Technical Field

This application relates to the field of battery technology, and more particularly, to a current collector, a battery cell, and a battery.

### Related Art

The current collector structure is a component of a battery cell and is commonly found in various types of batteries, such as lithium-ion batteries. In related technologies, batteries typically employ laser welding to join the current collector with the exposed tabs of a winding core (jelly roll). Current collectors are generally categorized into positive current collectors and negative current collectors.

### SUMMARY

In related technologies, the base material of the current collector is aluminum. The use of an aluminum-based current collector results in high resistance, leading to increased internal resistance within the battery cell and significant internal heat generation. Some current collectors are made from other materials with lower resistance, but these materials are susceptible to corrosion by the electrolyte, causing performance defects.

The present application provides a current collector. The current collector includes a current collector body and a surface aluminum layer. The current collector body is a copper layer, and the surface aluminum layer covers an outer surface of the current collector body.

The present application further provides a battery cell. The battery cell includes the aforementioned current collector.

The present application further provides a battery. The battery includes the aforementioned battery cell.

This application provides a current collector, a battery cell, and a battery. By changing the current collector body from the traditional aluminum material to copper, the internal resistance of the current collector during operation can be reduced, significantly decreasing the probability of heat generation. The outer surface of the copper current collector body is covered with a surface aluminum layer. This allows the surface aluminum layer to react with oxygen in the air during the high-temperature welding process when the current collector is integrated into the battery cell. This reaction generates a dense oxide layer in the welding area of the current collector body. This dense oxide layer has good corrosion resistance and is less prone to chemical reactions with the electrolyte. Therefore, during the manufacturing and operation of the battery cell, when the current collector inside the cell comes into contact with the electrolyte, the electrolyte directly interacts with the dense oxide layer in the welding area. This prevents the electrolyte from directly corroding the welding area, thereby mitigating the corrosion of the current collector's welding area caused by contact with the electrolyte after welding.

### BRIEF DESCRIPTION OF THE DRAWINGS

FIG. 1 is a schematic cross-sectional structural view of a current collector provided in some embodiments of the present application.
FIG. 2 is a schematic structural view of the current collector provided in some embodiments of the present application.
FIG. 3 is a schematic cross-sectional view of the current collector in FIG. 2.
FIG. 4 is a schematic structural view of a battery cell provided in some embodiments of the present application.
FIG. 5 is a schematic structural view of section A in FIG. 4.

### Figure descriptions for components:

1: current collector body; 11: electrolyte filling hole; 2: surface aluminum layer; 5: winding core; 7: dense oxide layer.

### DETAILED DESCRIPTION

In the description of the present application, it should be understood that the terms "first" and "second" are used for descriptive purposes only and should not be construed as indicating or implying relative importance or the quantity of the technical features indicated. Thus, features described as "first" or "second" may explicitly or implicitly include one or more such features. In the description of this application, 'plurality' means two or more, unless explicitly specified otherwise.

A current collector is a component that gathers electrical energy from a battery cell to a powered device to achieve power delivery or to transfer electrical energy to the battery cell when charging the battery cell. The current collector is typically connected to a winding core to form a battery cell.

The current collector is generally connected to the tabs of the winding core, and the connection method can generally be welding. In related technologies, laser welding is usually used to ensure welding strength and efficiency.

However, in related technologies, the base material of the current collector is aluminum. When aluminum is used as the base material for the current collector, the internal resistance of the battery cell is too high, and the internal heat generation of the battery cell is more serious. This not only consumes power but may also cause abnormal heat generation, which may burn out the battery cell, resulting in battery malfunction. Although other materials with low internal resistance can be used to manufacture current collectors in related technologies, most current collectors made of materials with low internal resistance are prone to corrosion when in contact with the electrolyte.

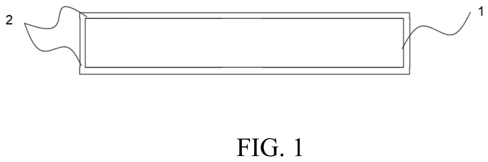

In a first aspect, please refer to FIG. 1, which is a schematic cross-sectional structural view of the current collector provided in an embodiment of the present application. This application provides a current collector, which includes a current collector body 1 and a surface aluminum layer 2. The current collector body 1 is a copper layer, and the surface aluminum layer 2 covers an outer surface of the current collector body 1.

It should be understood that the surface aluminum layer 2 may adhere to or be tightly affixed to the exterior of the current collector body 1.

It can be understood that the current collector in the related technology is a sheetlike object made of aluminum, and the surface of the current collector is generally not provided with a composite layer structure. Although the current collector made of aluminum is economical, it has high internal resistance. When the current collector is in working condition, it is easy to generate heat due to its own high internal resistance when inputting and outputting electric energy, which consumes electric energy and easily burns out components near the current collector, thereby shortening the service life of a battery cell.

The present application changes the material of the current collector body 1 from the aluminum used in traditional current collectors to copper. This alteration significantly reduces the internal resistance of the current collector during operation and greatly decreases the likelihood of heat generation. Additionally, a surface aluminum layer 2 coats the outer side of the copper current collector body 1. This configuration enables the surface aluminum layer 2, when welded to become part of the battery cell, to chemically react with oxygen in the air under the high temperatures generated during welding, forming a dense oxide layer 7 in a welding area of the current collector. This dense oxide layer 7 exhibits excellent corrosion resistance and is less likely to chemically interact with the electrolyte. Consequently, during the manufacturing and operational processes of the battery cell, where the current collector inside the cell comes into contact with the electrolyte, the electrolyte directly contacts the dense oxide layer 7 in the welding area. This prevents the electrolyte from easily corroding the welding area, thereby improving the corrosion resistance of the current collector's surface that comes into contact with the electrolyte after welding.

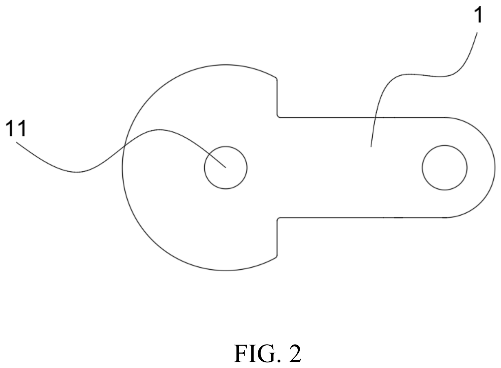

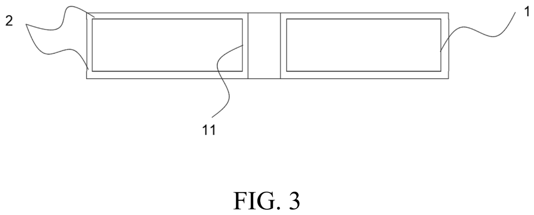

In some embodiments of the present application, referring to FIG. 2 and FIG. 3, FIG. 2 is a schematic structural view of the current collector provided in the embodiment of the present application, and FIG. 3 is a schematic cross-sectional view of the current collector in FIG. 2 provided in the embodiment of the present application. As an example, the current collector is a positive current collector, and an electrolyte filling hole 11 is formed on the surface of the current collector body 1 for injecting electrolyte into the inside of a shell of the battery cell, and the surface aluminum layer 2 also covers the hole wall of the electrolyte filling hole 11.

It can be understood that during the production process of the battery cell, an aluminum coating is plated on the current collector body 1 by electroplating or electroless plating, and then the coated current collector body 1 is oxidized under the high temperature generated during the welding process with the winding core so that a dense oxide layer 7 is formed on the coating, and then the coated current collector body 1 is assembled with the shell of the battery cell. After the assembly is completed, it is necessary to inject the electrolyte from the electrolyte filling hole 11 formed on the surface of the positive current collector. During the process of injecting the electrolyte, the electrolyte inevitably comes into contact with the electrolyte filling hole 11.

It can be understood that current collectors can generally be divided into positive current collectors and negative current collectors. The surface of the positive current collector is generally provided with an electrolyte filling hole 11 for injecting electrolyte into the battery cell. Generally speaking, the electrolyte easily corrodes the electrolyte filling hole 11 during the liquid injection process. In the present application, when the current collector is a positive current collector, the hole wall of the electrolyte filling hole 11 is also covered with a surface aluminum layer 2, and a dense oxide layer 7 is generated on the surface of the surface aluminum layer 2 under the high-temperature condition generated during the welding process. In this way, the hole wall of the electrolyte filling hole 11 can have the ability to resist the corrosion of the electrolyte during the process of injecting the electrolyte.

It should be noted that at room temperature, the surface of the surface aluminum layer 2 reacts with oxygen at room temperature to produce a thinner dense oxide layer 7. Under high-temperature conditions, the surface of the surface aluminum layer 2 reacts quickly with oxygen to produce a thicker dense oxide layer 7. The high temperature can be met by welding, and at least part of the surface aluminum layer 2 reacts quickly with oxygen to produce the dense oxide layer 7.

In some embodiments of this application, the surface aluminum layer 2 is a plating layer.

It can be understood that a bonding method between the surface aluminum layer 2 and the current collector body 1 can involve forming a composite structure by extruding the surface aluminum layer 2 onto the current collector body 1, or the bonding method can involve forming a plating structure by plating the surface aluminum layer 2 on the current collector body 1 by electroplating or electroless plating, or the bonding method can involve forming a thin film deposition structure by depositing the surface aluminum layer 2 on the current collector body 1 by a thin film deposition method. Among them, the plating structure formed by plating the surface aluminum layer 2 on the current collector body 1 by electroplating or electroless plating has a more uniform thickness than the composite structure formed by extruding the surface aluminum layer 2 on the current collector body 1, and is more economical and practical than the thin film deposition structure formed by depositing the surface aluminum layer 2 on the current collector body 1 by the thin film deposition method.

In an exemplary embodiment, the surface aluminum layer 2 can be an electroless plating layer.

It can be understood that a plating layer is plated on the surface of the current collector body 1, and generally, the surface aluminum layer 2 can be electroplated into an electroplating layer by electroplating; or the surface aluminum layer 2 can be plated into an electroless plating layer by electroless plating. Since the thickness of the plating layer is small, although the speed of electroplating to produce an electroplating layer is faster than the speed of electroless plating to produce an electroless plating layer, the electroless plating layer is more uniform than the electroplating layer. Therefore, forming the surface aluminum layer 2 by electroless plating to form an electroless plating layer can make the surface aluminum layer 2 generated on the surface of the current collector body 1 uniform in thickness, which is more conducive to improving the anti-electrolyte corrosion effect of the surface of the current collector body 1.

In some embodiments of this application, the thickness of the current collector body 1 is 0.1 mm to 0.5 mm. Optionally, the thickness of the current collector body 1 can be 0.15 mm to 0.25 mm, such as 0.15 mm, 0.20 mm, 0.25 mm, etc. Within this thickness range, the current collector body 1 has better structural strength and stability, thereby ensuring the welding quality of the battery cell formed by welding, while reducing material consumption and saving material costs.

In some embodiments of this application, the thickness of the surface aluminum layer 2 is 0.3 µm to 3.5 µm, such as 0.3 µm, 0.5 µm, 0.8 µm, 1 µm, 1.3 µm, 1.6 µm, 2 µm, 2.4 µm, 2.7 µm, 3 µm, 3.2 µm, or 3.5 µm, etc. Within this thickness range, the surface aluminum layer 2 has better corrosion resistance and wear resistance, and can effectively prevent the outer surface of the current collector body 1 from being corroded by the electrolyte or other media, while reducing the material cost of the surface aluminum layer 2.

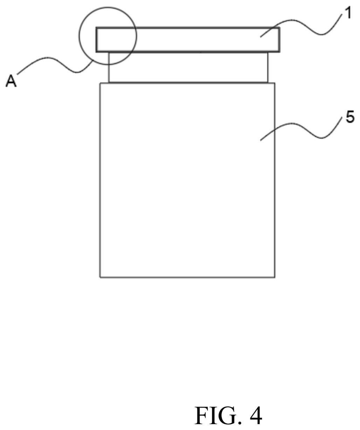

In a second aspect, refer to FIG. 4, which is a schematic structural view of the battery cell provided in an embodiment of this application. Specifically, it is a schematic structural view of a battery cell including a negative current collector. This embodiment also provides a battery cell comprising the current collector introduced in any one of the embodiments of the first aspect.

Since the current collector in this application enhances the resistance of the current collector body 1, i.e. the copper layer, to corrosion caused by contact with the electrolyte during operation, the battery cell that incorporates this current collector also benefits from these improvements.

In some embodiments of this application, the battery cell includes a winding core 5 and a current collector. The current collector and the tab of the winding core 5 are welded and fixed. In the welding area of the current collector, the surface aluminum layer 2 is oxidized during the welding process to form a dense oxide layer 7.

The present application combines the current collector body 1 with aluminum material. The combining method can be electroplating, electroless plating, extrusion, etc. The resulting current collector is then exposed to high temperatures during welding, causing the surface aluminum layer 2 made of aluminum material to form the dense oxide layer 7 at least in the welding area. Since the dense oxide layer 7 has good resistance to electrolyte corrosion, it can protect the welding area of the current collector from being directly corroded when the current collector comes into contact with the electrolyte, thereby improving the overall electrolyte corrosion resistance of the current collector.

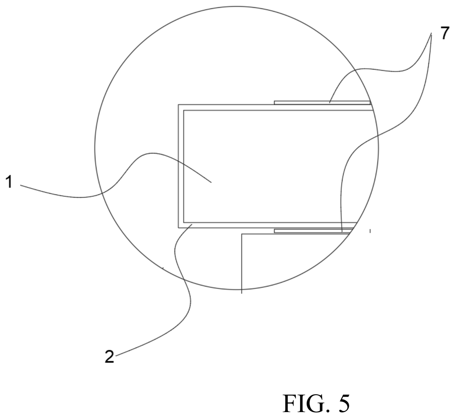

In some embodiments of the present application, referring to FIG. 4 and FIG. 5, FIG. 5 is a schematic structural view of part A in FIG. 4 provided in the embodiment of this application. The current collector and the tab of the winding core 5 are welded and fixed.

In some embodiments of the present application, the battery cell can include the winding core 5 and the current collector. In related technologies, the current collector and the winding core 5 are often welded, and the welding methods can include electric welding and laser welding.

In some embodiments of this application, the positive tab of the winding core 5 is aluminum foil, and the negative tab of the winding core 5 is copper foil.

It can be understood that the positive tab of the winding core 5 is aluminum foil, and the negative tab of the winding core 5 is copper foil. The internal resistance and heat generation of the current collector are greatly reduced, and the service life of the battery cell can be greatly improved.

In a third aspect, the present application also provides a battery, including the battery cell introduced in any one of the embodiments of the second aspect.

Since the battery cell and the current collector in this application have their welding area surface in contact with the electrolyte after welding, and in the welding area, the surface aluminum layer 2 is oxidized to form a corrosion-resistant dense oxide layer 7, thereby achieving the purpose that the welding area of the current collector is not easily corroded by the electrolyte, the battery including the battery cell also has the above beneficial effects.

As an example, the battery includes at least one of a battery module, a battery pack, and an energy storage container.

## Claims

1. A current collector, comprising a current collector body (1) and a surface aluminum layer (2), wherein the current collector body (1) is a copper layer, and the surface aluminum layer (2) covers an outer surface of the current collector body (1).

2. The current collector according to claim 1, wherein the current collector is a positive current collector, the current collector body (1) is provided with an electrolyte filling hole (11) defined on a surface of the current collector body (1), and the surface aluminum layer (2) covers a hole wall of the electrolyte filling hole (11).

3. The current collector according to claim 1, wherein the surface aluminum layer (2) is a plating layer.

4. The current collector according to claim 1, wherein a thickness of the current collector body (1) ranges from 0.1 millimeters to 0.5 millimeters.

5. The current collector according to claim 1, wherein a thickness of the surface aluminum layer (2) ranges from 0.3 micrometers to 3.5 micrometers.

6. The current collector according to claim 1, wherein the surface aluminum layer (2) is bonded to the current collector body (1) through extrusion.

7. The current collector according to claim 1, wherein the surface aluminum layer (2) is a plating structure plated on the current collector body (1) through electroplating or electroless plating.

8. The current collector according to claim 1, wherein the surface aluminum layer (2) is a thin film deposition structure deposited on the current collector body (1) through thin film deposition.

9. A battery cell, comprising a current collector as claimed in any one of claims 1 to 8.

10. The battery cell according to claim 9, comprising a winding core (5) and the current collector, wherein the current collector and tabs of the winding core (5) are welded and fixed, in a welding area of the current collector, a dense oxide layer (7) is formed by the oxidation of at least a portion of the surface aluminum layer (2) and is disposed on a surface of the welding area.

11. The battery cell according to claim 10, wherein the current collector is welded and fixed to the tabs of the winding core (5).

12. The battery cell according to claim 11, wherein a positive tab of the winding core (5) is made of aluminum foil, and a negative tab of the winding core (5) is made of copper foil.

13. A battery, comprising a battery cell as claimed in any one of claims 9 to 12.
